# EUROPÄISCHE PATENTSCHRIFT

(11) **EP 2 617 523 B1**
(45) Veröffentlichungstag und Bekanntmachung des Hinweises auf die Patenterteilung: **23.04.2014**
(21) Anmeldenummer: 12152052.2
(22) Anmeldetag: 23.01.2012
(51) Int. Cl.: B24B 5/42, B24B 21/02, B24B 35/00, B24B 49/10, B24B 49/16, B23Q 17/00, G01B 7/16

(54) **Finishvorrichtung zur finishenden Bearbeitung eines Werkstücks**
Finishing device for finishing a workpiece
Dispositif de finissage pour le finissage de surfaces d'une pièce usinée

(43) Veröffentlichungstag der Anmeldung: 24.07.2013
(73) Patentinhaber: Supfina Grieshaber GmbH & Co. KG, 77709 Wolfach (DE)
(72) Erfinder: Hildebrandt, Oliver, 78132 Homberg (DE)
(74) Vertreter: DREISS Patentanwälte PartG mbB

(56) Entgegenhaltungen:
- EP-A1- 1 518 643
- EP-A2- 0 459 948
- DE-A1- 4 330 808
- DE-A1- 19 607 778
- DE-A1- 19 954 519
- JP-A- 11 090 822
- US-A1- 2002 146 962

## Beschreibung

Die Erfindung betrifft eine Finishvorrichtung zur finishenden Bearbeitung eines Werkstücks, umfassend eine Krafterzeugungseinrichtung zur Erzeugung einer Antriebskraft, einen Kraftübertragungsarm und eine Andrückeinrichtung zur Beaufschlagung eines Finishwerkzeugs mit einer Arbeitskraft, wobei der Kraftübertragungsarm um eine Schwenkachse schwenkbar gelagert ist.

Die finishende Bearbeitung eines Werkstücks ist ein auch als "Superfinishen" oder "Feinstbearbeitungsverfahren" bezeichnetes Verfahren zur Oberflächenbearbeitung eines Werkstücks. Bei diesem Verfahren wird ein abrasiv wirkendes Finishwerkzeug, beispielweise ein Finishstein oder ein Finishband, auf die zu bearbeitende Werkstückoberfläche gedrückt. Dabei rotiert die zu bearbeitende Werkstückoberfläche. Der Rotation der zu bearbeitenden Werkstückoberfläche wird vorzugsweise eine oszillierende Bewegung überlagert, bei welcher sich das Finishwerkzeug und die zu bearbeitende Werkstückoberfläche in zu der Rotationsachse parallelen oder geneigten Richtungen relativ zueinander bewegen.

Die Komplexität der unterschiedlichen Bewegungen des zu bearbeitenden Werkstücks und/oder des Finishwerkzeugs hat zur Folge, dass es auch bei einer sorgfältigen Einrichtung und Bedienung einer Finishvorrichtung vorkommen kann, dass Störungen auftreten, beispielsweise bedingt durch eine Blockierung der Krafterzeugungseinrichtung oder durch eine Kollision zwischen einem Werkstückvorsprung und Teilen der Finishvorrichtung.

Finishvorrichtungen zur finishenden Bearbeitung eines Werkstücks sind beispielsweise aus der DE 196 07 778 A1 und aus der EP 1 518 643 A1 bekannt.

Hiervon ausgehend liegt der vorliegenden Erfindung die Aufgabe zugrunde, mechanische Störungen, die während der finishenden Bearbeitung eines Werkstücks bei einer Finishvorrichtung auftreten können, möglichst einfach und schnell erfassen zu können.

Diese Aufgabe wird bei einer Finishvorrichtung der eingangs genannten Art erfindungsgemäß dadurch gelöst, dass eine Erfassungseinrichtung zur Erfassung einer Verformung eines in dem Kraftfluss zwischen Antriebskraft und Arbeitskraft angeordneten Abschnitts des Kraftübertragungsarms und/oder zur Erfassung einer in dem Abschnitt anliegenden Verformungskraft vorgesehen ist.

Die Erfassungseinrichtung ist zwischen einem Bereich, in welchem die Arbeitskraft wirksam, und der Schwenkachse angeordnet. Hierdurch bleibt der für die Krafterzeugungseinrichtung zur Verfügung stehende Bauraum vollständig erhalten. Außerdem können Verformungen und/oder Verformungskräfte in einem Bereich erfasst werden, in welchem relativ hohe Verformungen und/oder Verformungskräfte auftreten.

Für eine einfache Umleitung einer Antriebskraft in eine Arbeitskraft ist der Kraftübertragungsarm um eine Schwenkachse schwenkbar gelagert.

Bei der erfindungsgemäßen Finishvorrichtung wird ein an sich starres Bauteil, welches eine Antriebskraft überträgt und in eine Arbeitskraft umwandelt, in Verbindung mit einer Erfassungseinrichtung benutzt, um eine Verformung und/oder eine die Verformung bedingende Kraft zu erfassen. Die Erfassung zumindest einer der genannten Größen ermöglicht es, mechanische Störungen der Finishvorrichtung detektieren zu können, und zwar insbesondere in einem Bereich, welcher in der Nähe der Wirkstelle des Finishwerkzeugs und der zu bearbeitenden Werkstückoberfläche angeordnet ist.

Die Erfassungseinrichtung ermöglicht es beispielsweise, eine Störung der Krafterzeugungseinrichtung erfassen zu können. Eine solche Störung kann darin bestehen, dass eine nicht ausreichend hohe oder eine zu stark variierende Antriebskraft erzeugt wird, wodurch sich eine zu hohe oder zu stark variierende Arbeitskraft ergibt. Eine solche unerwünschte Abweichung der Arbeitskraft von einer Soll-Arbeitskraft beeinflusst die während der finishenden Bearbeitung der Werkstückoberfläche erzielbaren Genauigkeiten. Daher ermöglicht es die erfindungsgemäße Finishvorrichtung über eine Detektion von mechanischen Störungen der Finishvorrichtung hinaus, eine Abweichung von einer Soll-Prozessqualität feststellen zu können.

Wenn im Rahmen der vorliegenden Erfindung von einem Abschnitt des Kraftübertragungsarms die Rede ist, welcher in dem Kraftfluss zwischen Antriebskraft und Arbeitskraft liegt, sind damit Materialabschnitte gemeint, in welchen in Folge der Einleitung der Antriebskraft und der Ausleitung der Arbeitskraft Verformungen und/oder diese Verformungen bedingende Kräfte erfassbar sind. Hierbei kann es sich um Materialabschnitte handeln, welche eine Außenfläche aufweisen und/oder Materialabschnitte, welche "innenliegend" sind, also keine Außenfläche aufweisen.

Die erfindungsgemäße Finishvorrichtung eignet sich im Prinzip für beliebige Belastungen des Kraftübertragungsarms. Eine besonders zuverlässige Erfassung mechanischer Störungen ergibt sich jedoch, wenn der Kraftübertragungsarm in Folge der Einleitung der Antriebskraft und einer von dem Werkstück über das Finishwerkzeug auf die Andrückeinrichtung wirkenden Gegenkraft auf Biegung beansprucht ist. Bei einer solchen Biegung treten insbesondere an den Außenflächen des Kraftübertragungsarms besonders gut detektierbare Verformungen auf.

Die erfindungsgemäße Finishvorrichtung eignet sich auch dann besonders gut, wenn der Kraftübertragungsarm in Folge einer von dem entlang einer Oszillationsachse oszillierend angetriebenen Werkstück auf die Andrückeinrichtung wirkenden Reibkraft auf Torsion beansprucht ist. Auch bei dieser Belastung, welche zusätzlich oder alternativ zu der vorstehend beschriebenen Biegebelastung auftreten kann, können Verformungen insbesondere an den Außenflächen des Kraftübertragungsarms in einfacher Weise erfasst werden.

In vorteilhafter Weise handelt es sich bei der Verformung, welche die Erfassungseinrichtung erfasst, um eine Dehnung und/oder Stauchung. Dies ermöglicht die Verwendung vergleichsweise einfacher, nachfolgend noch näher beschriebener Sensoren.

Ferner ist es vorteilhaft, wenn die Antriebskraft und die Arbeitskraft bezogen auf die Schwenkachse auf voneinander abgewandten Abschnitten des Kraftübertragungsarms wirksam sind. Dies ermöglicht es bei einer Finishvorrichtung mit zwei einander gegenüberliegenden Kraftübertragungsarmen, eine Krafterzeugungseinrichtung vorzusehen, welche voneinander abgewandte Antriebsdruckkräfte erzeugt, welche dann in aufeinander zugewandte Arbeitskräfte umgeleitet werden.

Bei der Erfassungseinrichtung kann es sich beispielsweise um einen Oberflächen-Dehnungssensor handeln. Ein solcher Oberflächen-Dehnungssensor ist beispielsweise von der Firma Kistler Instrumente AG, Winterthur, Schweiz, bekannt, beispielsweise unter der Typenbezeichnung "9232A...". Ein solcher Sensor ist vergleichsweise robust und ermöglicht eine einfache Erfassung einer Dehnung oder Stauchung an einer Außenfläche des Kraftübertragungsarms.

Zusätzlich oder alternativ hierzu ist es möglich, dass die Erfassungseinrichtung einen Quermessdübel umfasst. Bei einem solchen Quermessdübel wird die Verformung in einem innenliegenden Bereich des Kraftübertragungsarms erfasst. Beispielsweise kann ein Quarz-Quermessdübel des Typs "9241C..." der Firma Kistler verwendet werden.

Nach einer Ausführungsform der Erfindung ist die Andrückeinrichtung mit einem Finishwerkzeug in Form eines Finishsteins verbunden. In diesem Fall wird die Arbeitskraft der Andrückeinrichtung in den Finishstein übertragen, welcher dann mit einer Wirkfläche eine Werkzeugoberfläche finishend bearbeitet.

Alternativ hierzu weist die Andrückeinrichtung eine Andrückfläche zum Andrücken gegen ein Finishwerkzeug in Form eines Finishbands auf. In diesem Fall wird die Arbeitskraft auf das Finishband ausgeübt, welches seinerseits die Arbeitskraft auf die zu bearbeitende Werkstückoberfläche überträgt.

Weitere Merkmale und Vorteile der Erfindung sind Gegenstand der nachfolgenden Beschreibung und der zeichnerischen Darstellung bevorzugter Ausführungsbeispiele.

In den Zeichnungen zeigen:
- Fig. 1: eine perspektivische Darstellung einer Ausführungsform einer Finishvorrichtung zur finishenden Bearbeitung eines Werkstücks;
- Fig. 2: eine Seitenansicht eines Teils der Finishvorrichtung gemäß Fig. 1;
- Fig. 3: eine der Fig. 2 entsprechende Seitenansicht einer weiteren Ausführungsform einer Finishvorrichtung zur finishenden Bearbeitung eines Werkstücks.

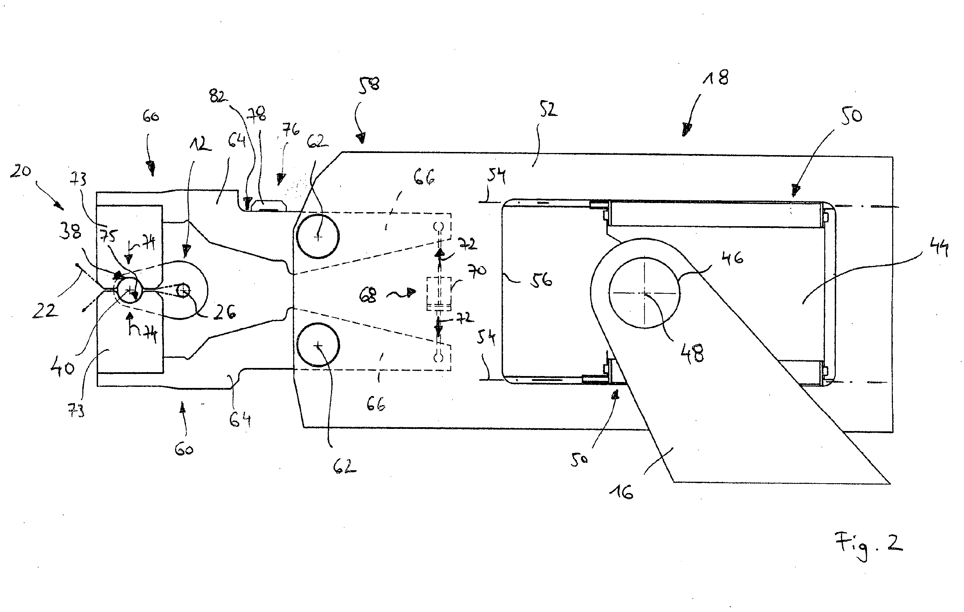

Eine insgesamt mit dem Bezugszeichen 10 bezeichnete Ausführungsform einer Finishvorrichtung dient zur finishenden Bearbeitung eines Werkstücks 12. Die Finishvorrichtung 10 umfasst ein ortsfestes Gestell 14 mit einem Gestellteil 16 zur Verbindung einer nachfolgend näher erläuterten Lagereinrichtung 18 mit dem Gestell 14. Die Lagereinrichtung 18 dient zur Lagerung einer nachfolgend näher erläuterten Andrückeinrichtung 20 an dem Gestell 14. Die Andrückeinrichtung 20 drückt ein Finishwerkzeug 22 (vergleiche Figur 2), beispielsweise in Form eines Finishbands, gegen eine finishend zu bearbeitende Oberfläche des Werkstücks 12.

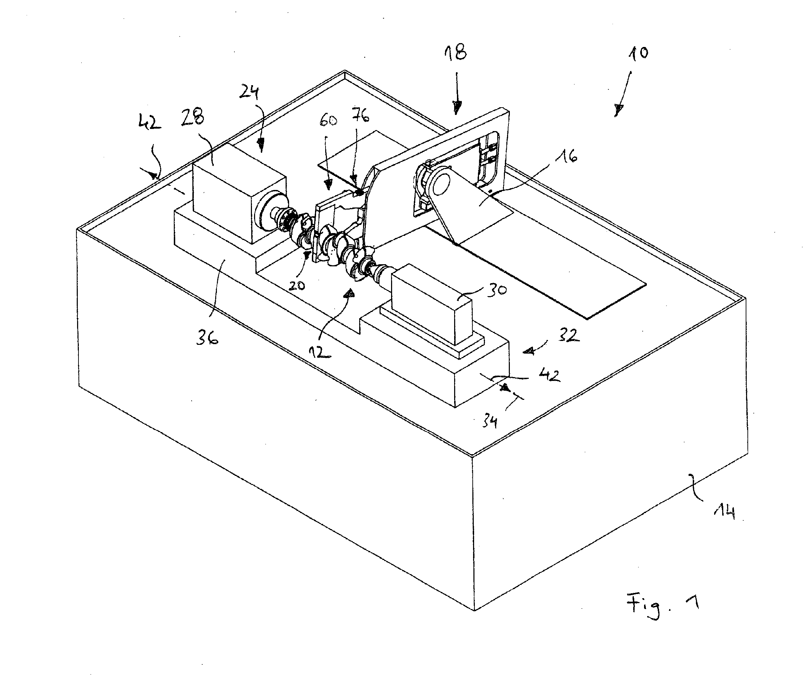

Die Finishvorrichtung 10 umfasst eine Drehantriebseinrichtung 24 (vergleiche Figur 1) zum Drehen des Werkstücks 12 um eine Werkstückachse 26 (vergleiche Figur 2). Die Drehantriebseinrichtung 24 umfasst einen Spindelstock 28 und einen Reitstock 30. Das Werkstück 12 ist zwischen dem Spindelstock 28 und dem Reitstock 30 eingespannt. Der Verbund aus Drehantriebseinrichtung 24 und Werkstück 12 ist mittels eines Oszillationsantriebs 32 entlang einer zu der Werkstückachse 26 parallelen Oszillationsachse 34 kurzhubig hin- und herbewegbar.

In vorteilhafter Weise umfasst der Oszillationsantrieb 32 einen Träger 36 zur Befestigung des Spindelstocks 28 und des Reitstocks 30. Der Träger 36 ist mittels einer an sich bekannten und daher nicht näher erläuterten Antriebseinrichtung, beispielsweise in Form eines Exzenterantriebs, angetrieben.

Das Werkstück 12 weist eine Werkstückumfangsfläche 38 auf, welche zu der Werkstückachse 26 exzentrisch versetzt ist. Insbesondere erstreckt sich die Werkstückumfangsfläche 38 konzentrisch um eine Zusatzachse 40, welche parallel und zu der Werkstückachse 26 beabstandet verläuft.

Bei dem Werkstück 12 handelt es sich insbesondere um eine Kurbelwelle. Bei der Werkstückumfangsfläche 38 handelt es sich insbesondere um die Lagerfläche eines Hublagers der Kurbelwelle.

Während der Bearbeitung des Werkstücks 12 rotiert dieses um die Werkstückachse 26. Dabei bewegt sich die Werkstückumfangsfläche 38 dem Abstand der Achsen 40 und 26 entsprechend kreisförmig um die Werkstückachse 26. Der vorstehend beschriebenen Drehbewegung wird mittels des Oszillationsantriebs 32 eine in Figur 1 mit einem Doppelpfeil 42 angedeutete Oszillationsbewegung überlagert, um unter abrasiver Wirkung des Finishwerkzeugs 22 die Werkstückumfangsfläche 38 mit einer Kreuzschliffstruktur zu versehen.

Da die Werkstückumfangsfläche 38 sich wie vorstehend erläutert kreisförmig um die Werkstückachse 26 herumbewegt, ist es erforderlich, dass auch das Finishwerkzeug 22 und somit die Andrückeinrichtung 20 dieser Bewegung der Werkstückumfangsfläche 38 folgen können. Daher weist die Lagereinrichtung 18 zur Lagerung der Andrückeinrichtung 20 an dem Gestell 14 zwei Freiheitsgrade auf, welche eine Bewegung der Andrückeinrichtung 20 innerhalb einer zu der Werkstückachse 26 senkrechten Ebene ermöglicht.

Die Lagereinrichtung 18 umfasst ein Schwenkteil 44, welches mittels eines Schwenklagers 46 um eine Schwenkachse 48 schwenkbar an dem Gestellteil 16 gehalten ist. Die Schwenkachse 48 erstreckt sich parallel zu der Werkstückachse 26.

Das Schwenkteil 44 dient zur Anordnung mindestens einer Linearführung 50, mittels welcher ein Lagerteil 52 entlang einer Führungsachse 54 der Linearführung 50 verschiebbar relativ zu dem Schwenkteil 44 gelagert ist.

Das Lagerteil 52 erstreckt sich im Wesentlichen innerhalb einer senkrecht zu der Werkstückachse 26 verlaufenden Ebene. Das Lagerteil 52 weist eine Durchbrechung 56 auf, welche von dem Schwenklager 46 durchsetzt ist.

Das Lagerteil 52 weist ein dem Werkstück 26 zugewandtes Lagerteilende 58 zur Anordnung mindestens eines Kraftübertragungsarms 60, vorzugsweise zur Anordnung von zwei Kraftübertragungsarmen 60, auf.

Die Kraftübertragungsarme 60 sind relativ zu dem Lagerteil 52 um jeweilige Schwenkachsen 62 verschwenkbar. Die Schwenkachsen 64 verlaufen insbesondere parallel zu der Schwenkachse 48 des Schwenkteils 44.

Die Kraftübertragungsarme 60 weisen einen ersten Abschnitt 64 auf, welcher sich zwischen der Andrückeinrichtung 20 und der Schwenkachse 62 erstreckt. Die Kraftübertragungsarme 60 weisen ferner einen zweiten Abschnitt 66 auf, welcher sich zwischen der Schwenkachse 62 und einer Krafterzeugungseinrichtung 68 erstreckt.

Die Krafterzeugungseinrichtung 68 ist beispielsweise in Form einer Hydraulikeinheit 70 ausgebildet, welche die zweiten Abschnitte 66 der Kraftübertragungsarme 60 mit Antriebskräften 72 beaufschlagt.

Die Andrückeinrichtung 20 umfasst mindestens ein einem Kraftübertragungsarm 60 zugeordnetes Andrückelement 73, vorzugsweise zwei jeweils einem Kraftübertragungsarm 60 zugeordnete Andrückelemente 73, welches oder welche jeweils eine Andrückfläche 75 aufweist oder aufweisen. Die Andrückflächen 75 sind insbesondere schalenförmig ausgebildet sind, sodass ein als Finishband ausgebildetes Finishwerkzeug 22 entlang eines Teilumfangs der Werkstückumfangsfläche 38 gegen diese angedrückt werden kann.

Die Andrückeinrichtung 20 und die Krafterzeugungseinrichtung 68 sind bezogen auf die Schwenkachsen 64 auf voneinander abgewandten Seiten der Andrückelemente 60 angeordnet. Auf diese Weise können voneinander abgewandte Antriebskräfte 72 in einander zugewandte Arbeitskräfte 74 umgeleitet werden.

Bedingt durch die von der Andrückeinrichtung 20 auf das Werkstück 12 ausgeübten Arbeitskräfte 74 wirken jeweils entgegengesetzt gerichtete Gegenkräfte von dem Werkstück 12 auf die Andrückeinrichtung 20. Diese Gegenkräfte sind im Wesentlichen parallel zu den Antriebskräften 72 ausgerichtet und wirken bezogen auf die Schwenkachse 62 auf voneinander abgewandte Abschnitte 64 und 66 der Kraftübertragungsarme 60. Hierdurch sind die Kraftübertragungsarme 60 auf Biegung beansprucht.

Bedingt durch die Oszillation des Werkstücks 12 entlang der Oszillationsachse 42 wirken zwischen der Werkstückumfangsfläche 38 und dem Finishwerkzeug 22 Reibkräfte, welche sich auf die Andrückeinrichtung 20 und somit auch auf die Kraftübertragungsarme 60 übertragen. Hierdurch sind die Kraftübertragungsarme 60 in einer zu der Oszillationsachse 42 parallelen Richtung mit Querkräften beansprucht. Somit wird der Biegebeanspruchung der Kraftübertragungsarme 60 eine Torsionsbeanspruchung überlagert.

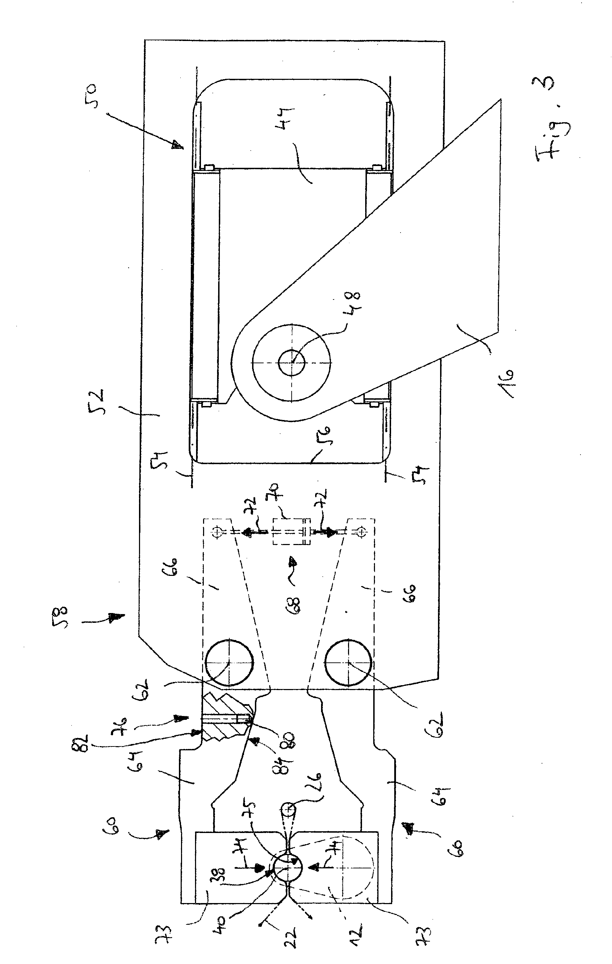

Zur Erfassung einer Verformung zumindest eines der Kraftübertragungsarme 60 ist eine Erfassungseinrichtung 76 vorgesehen, welche mit mindestens einem Kraftübertragungsarm 60 verbunden ist. Bei der Erfassungseinrichtung 76 handelt es sich beispielsweise um einen Oberflächen-Dehnungssensor 78 (vgl. Figur 2) oder um einen Quermessdübel 80 (vgl. Figur 3).

Die Erfassungseinrichtung 76 ist vorzugsweise in dem Bereich des Kraftübertragungsarms 60 angeordnet, in welchem bedingt durch die auf den Kraftübertragungsarm 60 wirkenden Kräfte größtmögliche Verformungen anliegen. In Folge der Biegebeanspruchung des Kraftübertragungsarms 60 durch die Gegenkräfte des Werkstücks 12 auf die Andrückeinrichtung 20 und durch die Antriebskräfte 72 bedingt tritt eine maximale Stauchung des Kraftübertragungsarms 60 in einem (entlang der Längserstreckung des Kraftübertragungsarms gesehen) mittleren Bereich des Kraftübertragungsarms 60 auf, und zwar auf einer dem Werkstück 12 abgewandten Außenseite 82 des Kraftübertragungsarms 60 (vgl. Figur 2).

Eine maximale Dehnung des Kraftübertragungsarms 60 tritt ebenfalls in einem mittleren Bereich des Kraftübertragungsarms 60 auf, jedoch an einer dem Werkstück 12 zugewandten Innenseite 84 des Kraftübertragungsarms 60 (vgl. Figur 3). Es ist daher bevorzugt, Oberflächen-Dehnungssensoren 78 an oder benachbart zu der Außenseite 82 und/oder der Innenseite 84 eines Kraftübertragungsarms 60 zu positionieren.

Auch bei einem Einsatz von Quermessdübeln 80 ist es bevorzugt, wenn diese zwar innerhalb des Materials des Kraftübertragungsarms, dort aber benachbart zu einer Außenseite 82 und/oder Innenseite 84 eines Kraftübertragungsarms 60 angeordnet sind.

## Patentansprüche

1. Finishvorrichtung (10) zur finishenden Bearbeitung eines Werkstücks (12), umfassend eine Krafterzeugungseinrichtung (68) zur Erzeugung einer Antriebskraft (72), einen Kraftübertragungsarm (60) und eine Andrückeinrichtung (20) zur Beaufschlagung eines Finishwerkzeugs (22) mit einer Arbeitskraft (74), wobei der Kraftübertragungsarm (60) um eine Schwenkachse (62) schwenkbar gelagert ist, **dadurch gekennzeichnet, dass** eine Erfassungseinrichtung (76) zur Erfassung einer Verformung eines in dem Kraftfluss zwischen Antriebskraft (72) und Arbeitskraft (74) angeordneten Abschnitts (64, 66) des Kraftübertragungsarms (60) und/oder zur Erfassung einer in dem Abschnitt (64, 66) anliegenden Verformungskraft vorgesehen ist, und dass die Erfassungseinrichtung (76) zwischen einem Bereich, in welchem die Arbeitskraft (74) wirksam ist, und der Schwenkachse (62) angeordnet ist.

2. Finishvorrichtung (10) nach Anspruch 1, **dadurch gekennzeichnet, dass** der Kraftübertragungsarm (60) infolge der Einleitung der Antriebskraft (72) und einer von dem Werkstück (12) über das Finishwerkzeug (22) auf die Andrückeinrichtung (20) wirkenden Gegenkraft auf Biegung beansprucht ist.

3. Finishvorrichtung (10) nach Anspruch 1 oder 2, **dadurch gekennzeichnet, dass** der Kraftübertragungsarm (60) infolge einer von dem entlang einer oder um eine Oszillationsachse (34) oszillierend angetriebenen Werkstück auf die Andrückeinrichtung (20) wirkenden Reibkraft auf Torsion beansprucht ist.

4. Finishvorrichtung (10) nach einem der voranstehenden Ansprüche, **dadurch gekennzeichnet, dass** die Verformung gleich einer Dehnung und/oder Stauchung ist.

5. Finishvorrichtung (10) nach einem der voranstehenden Ansprüche, **dadurch gekennzeichnet, dass** die Antriebskraft (72) und die Arbeitskraft (74) bezogen auf die Schwenkachse (62) auf voneinander abgewandten Abschnitten (64, 66) des Kraftübertragungsarms (60) wirksam sind.

6. Finishvorrichtung (10) nach einem der voranstehenden Ansprüche, **dadurch gekennzeichnet, dass** die Erfassungseinrichtung (76) einen Oberflächen-Dehnungssensor (78) umfasst.

7. Finishvorrichtung (10) nach einem der voranstehenden Ansprüche, **dadurch gekennzeichnet, dass** die Erfassungseinrichtung (76) einen Quermessdübel (80) umfasst.

8. Finishvorrichtung (10) nach einem der voranstehenden Ansprüche, **dadurch gekennzeichnet, dass** die Andrückeinrichtung (20) mit einem Finishwerkzeug (22) in Form eines Finishsteins verbunden ist.

9. Finishvorrichtung (10) nach einem der voranstehenden Ansprüche, **dadurch gekennzeichnet, dass** die Andrückeinrichtung (20) eine Andrückfläche (75) zum Andrücken gegen ein Finishwerkzeug (22) in Form eines Finishbands aufweist.

## Claims

1. A finishing device (10) for finishing a workpiece (12), including a force generating device (68) for generating a driving force (72), a force transmitting arm (60) and a pressing device (20) for exerting a working force (74) upon a finishing tool (22), whereby the force transmitting arm (60) is supported so as to be able to pivot about a pivot axis (62), **characterized in that** a detection device (76) is provided for detecting a deformation of a segment (64, 66) of the force transmitting arm (60) that is arranged within the flux of forces between the driving force (72) and the working force (74) and/or to detect a deformation force which is present in the segment (64, 66), and that the detection device (76) is arranged between an area in which the working force (74) is effective and the pivot axis (62).

2. The finishing device (10) as recited in Claim 1, **characterized in that** the force transmitting arm (60) is made to bend as a result of the application of the driving force (72) and an opposing force that acts on the pressing device (20) by the workpiece (12) via the finishing tool (22).

3. The finishing device (10) as recited in Claim 1 or 2, **characterized in that** the force transmitting arm (60) is made to twist as a result of a friction force that acts on the pressing device (20) by the workpiece, which is driven in an oscillating fashion along or around an oscillation axis (34).

4. The finishing device (10) as recited in any of the preceding claims, **characterized in that** the deformation is equivalent to an expansion and/or a compression.

5. The finishing device (10) as recited in one of the preceding claims, **characterized in that** the driving force (72) and the working force (74) act on segments (64, 66) of the force transmitting arm (60) that face away from each other, seen from the point of view of the pivot axis (62).

6. The finishing device (10) as recited in any of the preceding claims, **characterized in that** the detection device (76) includes a surface strain sensor (78).

7. The finishing device (10) as recited in any of the preceding claims, **characterized in that** the detection device (76) includes a transverse measuring dowel (80).

8. The finishing device (10) as recited in any of the preceding claims, **characterized in that** the pressing device (20) is connected to a finishing tool (22) in the form of a finishing stone.

9. The finishing device (10) as recited in any of the preceding claims, **characterized in that** the pressing device (20) has a pressure surface (75) for pressing against a finishing tool (22) in the form of a finishing strip.

## Revendications

1. Dispositif de finissage (10) pour l'usinage de finissage d'une pièce (12), comprenant un dispositif de génération de force (68) destiné à générer une force motrice (72), un bras de transmission de force (60) et un dispositif presseur (20) pour soumettre un outil de finissage (22) à une force de travail (74), dans lequel ledit bras de transmission de force (60) est logé à pivotement autour d'un axe de pivotement (62), **caractérisé par le fait que** l'on prévoit un dispositif de détection (76) destiné à détecter une déformation d'une portion (64, 66) du bras de transmission de force (60), qui est disposée dans le flux de force entre la force motrice (72) et la force de travail (74), et/ou à détecter une force de déformation appliquée dans ladite portion (64, 66), et que ledit dispositif de détection (76) est agencé entre une zone dans laquelle agit la force de travail (74) et ledit axe de pivotement (62).

2. Dispositif de finissage (10) selon la revendication 1, **caractérisé par le fait que**, à la suite de l'application de la force motrice (72) et d'une force opposée qui agit depuis ladite pièce (12) via l'outil de finissage (22) sur le dispositif presseur (20), le bras de transmission de force (60) est soumis à des efforts de flexion.

3. Dispositif de finissage (10) selon la revendication 1 ou 2, **caractérisé par le fait que**, à la suite d'une force de friction qui agit depuis ladite pièce entraîné à oscillation le long ou autour d'un axe d'oscillation (34), sur le dispositif presseur (20), le bras de transmission de force (60) est soumis à des efforts de torsion.

4. Dispositif de finissage (10) selon l'une quelconque des revendications précédentes, **caractérisé par le fait que** la déformation est égale à une extension et/ou à un refoulement.

5. Dispositif de finissage (10) selon l'une quelconque des revendications précédentes, **caractérisé par le fait que** la force motrice (72) et la force de travail (74) agissent, par rapport audit axe de pivotement (62), sur des portions (64, 66) du bras de transmission de force (60) qui sont opposées les unes aux autres.

6. Dispositif de finissage (10) selon l'une quelconque des revendications précédentes, **caractérisé par le fait que** ledit dispositif de détection (76) comprend un capteur d'extension de surface (78).

7. Dispositif de finissage (10) selon l'une quelconque des revendications précédentes, **caractérisé par le fait que** ledit dispositif de détection (76) comprend un goujon de mesure transversale (80).

8. Dispositif de finissage (10) selon l'une quelconque des revendications précédentes, **caractérisé par le fait que** ledit dispositif presseur (20) est relié à un outil de finissage (22) sous forme d'une pierre de finissage.

9. Dispositif de finissage (10) selon l'une quelconque des revendications précédentes, **caractérisé par le fait que** ledit dispositif presseur (20) présente une surface de plaquage (75) destinée à être plaquée contre un outil de finissage (22) sous forme d'une bande de finissage.
